# EUROPEAN PATENT APPLICATION

(11) **EP 3 506 182 A1**
(43) Date of publication of application: **03.07.2019**
(21) Application number: 17846122.4
(22) Date of filing: 15.08.2017
(51) Int. Cl.: G06Q 10/10, G06Q 50/10, G06F 13/00, G06F 16/00

(54) **INFORMATION PROCESSING APPARATUS, INFORMATION PROCESSING METHOD, AND PROGRAM**

(30) Priority: 29.08.2016 JP 2016167013
(71) Applicant: Sony Corporation, Tokyo 108-0075 (JP)
(72) Inventor: SAITO Mari, Tokyo 108-0075 (JP)
(74) Representative: MFG Patentanwälte Meyer-Wildhagen Meggle-Freund Gerhard PartG mbB
(86) International application number: PCT/JP2017/029343
(87) International publication number: WO 2018/043114

(57) **Abstract**

[Problem]

To cause presentation of information to be more suitably performed.

[Solving Means]

An information processing apparatus includes: a setting section configured to set a topic representing contents of utterance; a storage section configured to store the topic and a sharer who shares the topic so as to be associated with each other; and a presentation section configured to, in a case where it is detected that the sharer stays together, present information associated with the topic to the sharer. The sharer is a user who has conversation about the topic. The presentation section presents a keyword extracted from the utterance to the sharer. The present technology, for example, can be applied to an information processing apparatus which presents information.

## Description

### [Technical Field]

The present technology relates to an information processing apparatus, an information processing method, and a program, and relates to an information processing apparatus, an information processing method, and a program each of which, for example, causes information obtained from conversation of users to be presented in a suitable form to a suitable user.

### [Background Art]

PTL 1 proposes a dialogue supporting apparatus which directly processes or processes only a part of personal information or place information, thereby presenting such information as to support generation and continuation of informal dialogue while privacy and awareness are reconciled to enable the dialogue to be supposed.

PTL 2 proposes an information processing apparatus which comforts interpersonal communication by collecting pieces of information, and can put a limit responding to a party with respect to disclosure of information.

### [Citation List]

### [Patent Literature]

[PTL 1]
   JP 2004-246713A
[PTL 2]
   JP 2013-218462A

### [Summary]

### [Technical Problem]

As described in PTL 1 or PTL 2, it is proposed that the presentation of the information makes the inter-human communication smooth. However, it is possible that the information which is better not to present is also proposed.

The present technology has been made in the light of such a situation, and enables the presentation of the information to be more suitably performed.

### [Solution to Problem]

An information processing apparatus of one aspect of the present technology includes a setting section configured to set a topic representing contents of utterance, a storage section configured to store the topic and a sharer sharing the topic so as to be associated with each other, and a presentation section configured to, in a case where it is detected that the sharer stays together, present information associated with the topic to the sharer.

An information processing method of one aspect of the present technology includes the steps of: setting a topic representing contents of utterance; storing the topic and a sharer sharing the topic so as to be associated with each other; and in a case where it is detected that the sharer stays together, presenting information associated with the topic to the sharer.

A program of one aspect of the present technology in accordance with which a computer executes processing includes the steps of: setting a topic representing contents of utterance; storing the topic and a sharer sharing the topic so as to be associated with each other; and in a case where it is detected that the sharer stays together, presenting information associated with the topic to the sharer.

In the information processing apparatus, the information processing method, and the program of the one aspect of the present technology, the topic representing the contents of the utterance is set, the topic and the sharer sharing the topic are stored so as to be associated with each other, and in the case where it is detected that the sharer stays together, the information associated with the topic is presented to the sharer.

It should be noted that the information processing apparatus may be an independent apparatus, or may be an internal block configuring one apparatus.

In addition, the program can be presented by being transmitted through a transmission medium, or being recorded in a recording medium.

### [Advantageous Effect of Invention]

According to the one aspect of the present technology, the presentation of the information can be more suitably performed.

It should be noted that the effect described herein is not necessarily limited, and any of the effects described in the present disclosure may also be offered.

### [Brief Description of Drawings]

FIG. 1 is a block diagram depicting a configuration of an embodiment of an information processing system to which the present technology is applied.
FIG. 2 is a block diagram depicting a configuration of another information processing system.
FIG. 3 is a view for explaining an operation of the information processing system.
FIG. 4 is a view for explaining the operation of the information processing system.
FIG. 5 is a block diagram for explaining a configuration of an information acquiring section.
FIG. 6 is a block diagram for explaining a configuration of an information processing section.
FIG. 7 is a block diagram for explaining a topic database.
FIG. 8 is a view for explaining an operation of the information processing system.
FIG. 9 is a block diagram for explaining a topic database.
FIG. 10 is a view for explaining an operation of the information processing system.
FIG. 11 is a view for explaining the operation of the information processing system.
FIG. 12 is a view for explaining the operation of the information processing system.
FIG. 13 is a block diagram for explaining a topic database.
FIG. 14 is a view for explaining an operation of the information processing system.
FIG. 15 is a view for explaining the operation of the information processing system.
FIG. 16 is a view for explaining the operation of the information processing system.
FIG. 17 is a block diagram for explaining a topic database.
FIG. 18 is a view for explaining an operation of the information processing system.
FIG. 19 is a view for explaining the operation of the information processing system.
FIG. 20 is a flow chart for explaining the operation of the information processing system.
FIG. 21 is a view for explaining an operation of the information processing system.
FIG. 22 is a block diagram for explaining a topic database.
FIG. 23 is a view for explaining an operation of the information processing system.
FIG. 24 is a view for explaining the operation of the information processing system.
FIG. 25 is a view for explaining the operation of the information processing system.
FIG. 26 is a view for explaining the operation of the information processing system.
FIG. 27 is a block diagram for explaining a recording medium.

### [Description of Embodiment]

Hereinafter, a mode for carrying out the present technology (hereinafter referred to as an embodiment) will be described.

### <Example of Configuration of System>

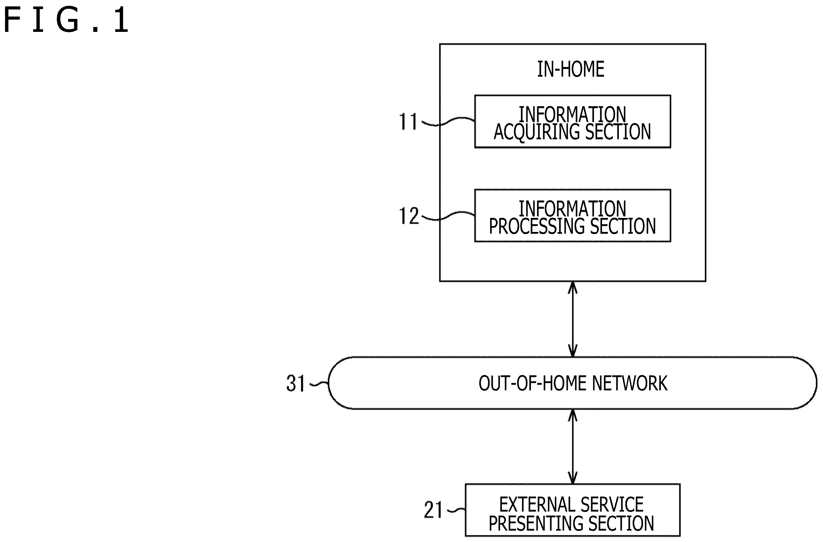

FIG. 1 is a block diagram depicting a configuration of an embodiment of an information processing system to which the present technology is applied. An information processing system includes an information acquiring section 11, an information processing section 12, an external service presenting section 21, and an out-of-home network 31.

The information acquiring section 11, the information processing section 12, and the external service presenting section 21 are connected to one another through the out-of-home network 31, and are configured to mutually exchange data.

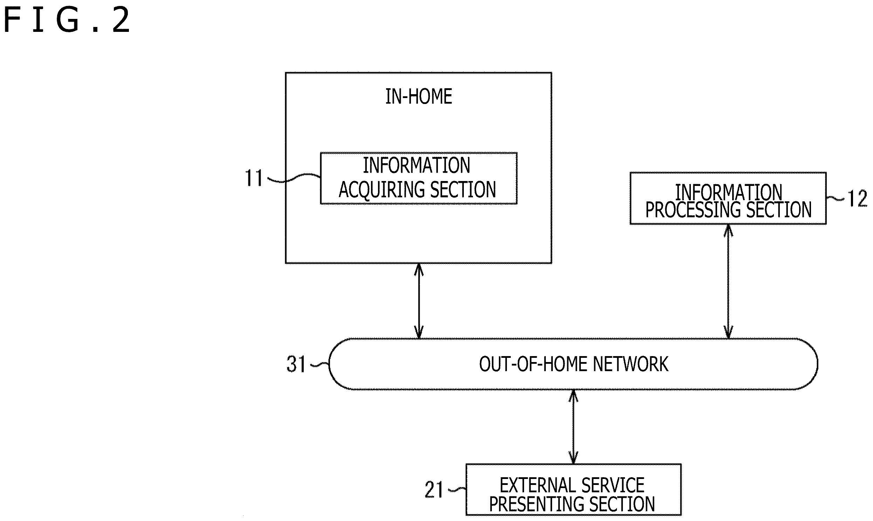

In the information processing system depicted in FIG. 1, the information acquiring section 11 and the information processing section 12 are depicted as the apparatuses which are installed in a home. However, like the information processing system depicted in FIG. 2, there may be adopted a configuration such that the information processing section 12 is installed in out of the home, and exchanges the data with the information acquiring section 11 through the out-of-home network 31.

In the information processing system depicted in FIG. 1, the information acquiring section 11 and the information processing section 12 are installed in the home, and are connected to each other through a network built in the home, for example, a LAN (Local Area Network) configured in a wireless or/and wired manner. The information acquiring section 11 and the information processing section 12 are configured so as to exchange the data with each other through the network.

In addition, the information processing section 12 is connected to the external service presenting section 21 through the out-of-home network 31 and is configured to exchange the data with each other.

In the information processing system depicted in FIG. 1 or FIG. 2 (hereinafter a description will be continuously given by exemplifying the information processing system depicted in FIG. 1), the information acquiring section 11 acquires information. The information thus acquired, for example, is the utterance of a user, the conversation between the users, information used to identify the user, and the like.

The information acquired in the information acquiring section 11 is supplied to the information processing section 12 and is processed therein. The information processing section 12, for example, records the conversation between the users, decides contents (topic) of the conversation, specifies the user who has the conversation, and specifies which of rooms in the home the users have the conversation in. In addition, the information processing section 12 makes inquiry about predetermined information to the external service presenting section 21, and presents the inquiry result to the user.

The external service presenting section 21 is a server referred to as a so-called retrieval server, or a server for managing a shopping site in which shopping and the like can be performed.

### <Example of Processing in System>

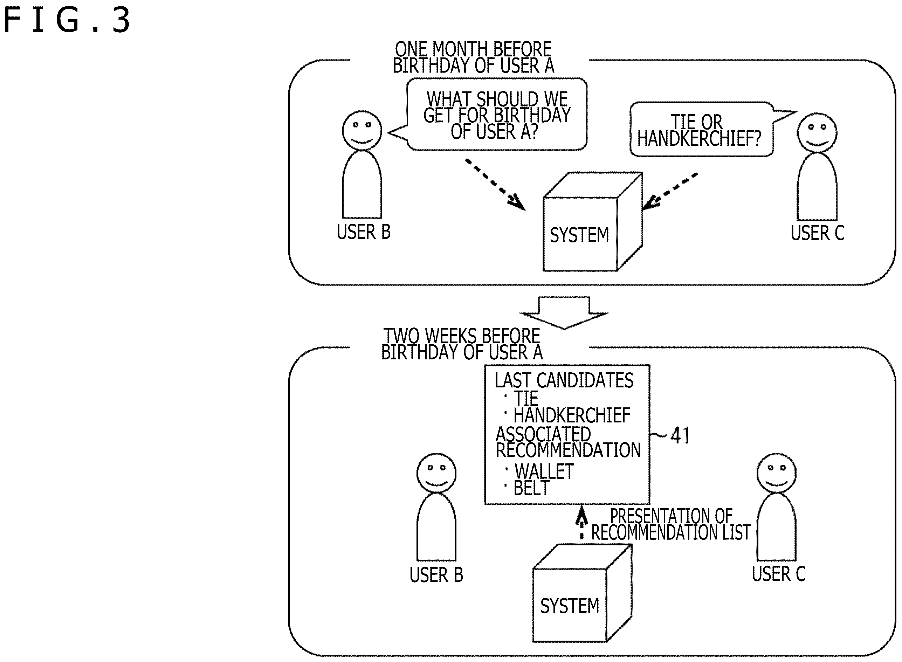

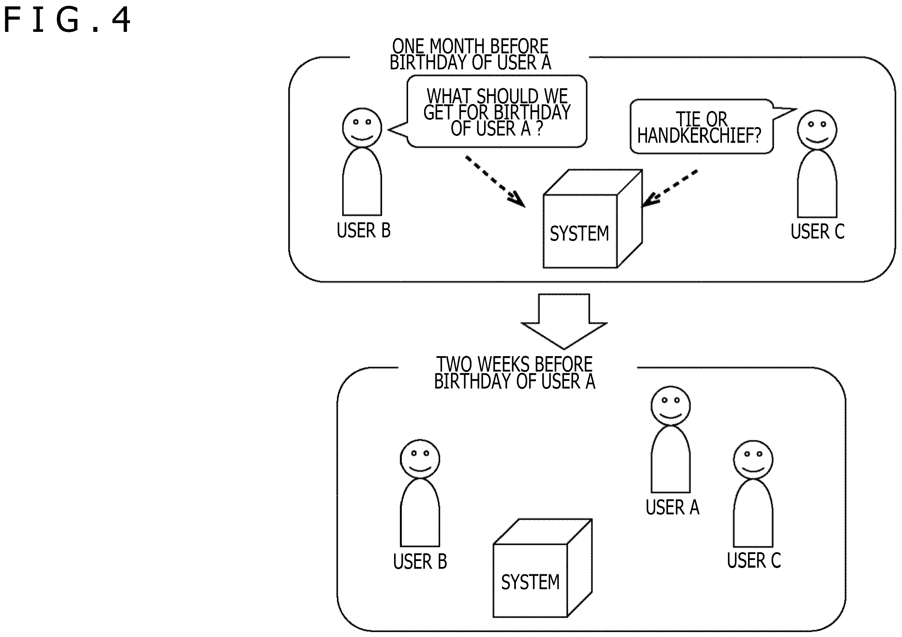

A description will now be given with respect to the processing in the information processing system depicted in FIG. 1 with reference to FIG. 3 and FIG. 4. In the information processing system, the users who share the information in common can be set, the information can be presented to the users who share the information, and it may not present the information when a user who stays other than the users who share the information.

A description will be given with respect to the processing of the information processing system in the case where the users who share the information are set, and the information is presented to the users who share the information with reference to FIG. 3.

In FIG. 3, a description will be given by exemplifying an example in which situations of one month and two weeks before a birthday of a user A is depicted, and a situation in which a user B and a user C share a topic about the birthday of the user A with each other.

One month before the birthday of the user A, the user B and the user C discuss what should we get for the birthday of the user A with each other in a predetermined room. The user B asks the user C a question of "what should we get for the birthday of the user A?" The user C gives a reply to the user B "tie or handkerchief?"

Such a conversation is monitored by the information processing system. The information acquiring section 11 of the information processing system acquires the conversation between the user B and the user C. The information processing section 12 analyzes the contents of the conversation to acquire that contents of the conversation is the contents about the present for the birthday of the user A as the analysis result.

The information processing system sets that the information associated with "the present for the birthday of the user A" is the information which the user B and the user C share with each other.

It is assumed that the time has elapsed, and it becomes two weeks before the present for the birthday of the user A. At this time, when the information processing system detects a situation in which the user B and the use C stay in the same room, the information associated with "the present for the birthday of the user A" is presented to the user B and the user C. At this time, a situation in which the user A does not stay in the room is set.

For example, as depicted in FIG. 3, a recommendation list 41 of "the present for the birthday of the user A" is presented. The recommendation list 41 is presented to a television receiver installed in the room in which the user B and the user C stay, a mobile terminal of the user B or the user C, or the like. The recommendation list 41 may be presented in the form of a sound.

A candidate such as "the last candidate tie handkerchief" is described in the recommendation list 41. This candidate is a keyword (candidate) extracted from the conversation between the user B and the user C one month before the birthday of the user A.

In addition, a candidate such as "an associated recommendation wallet belt" is also described in the recommendation list 41. This candidate is a candidate which, for example, the information processing system makes an inquiry to the external service presenting section 21 to obtain.

In such a way, the user who has the conversation is set as the user who shares the contents of the conversation, and suitably, the conversation contents are suitably presented to the user who may share the contents of the conversation.

On the other hand, as will be described with reference to FIG. 4, the user who does not have the conversation is set as the user who does not share the contents of the conversation which another user has, and the information is not presented to another user.

Referring to FIG. 4, one month before the birthday of the user A, same as the case of the situation depicted in FIG. 3, the user B and the user C discuss what should we get for the birthday of the user A with each other in the predetermined room.

It is assumed that the time has elapsed, and it becomes two weeks before the present for the birthday of the user A. At this time, the information processing system detects a situation in which the user B and the use C stay in the same room. However, the information processing system detects that the user A also stays in the same room.

The user A is the user who did not stay in that place of interest when one month before the birthday of the user A, the user B and the user C had the conversation about the present for the birthday of the user A. Therefore, the user A is not set as the user who shares the information of "the present for the birthday of the user A."

Therefore, when the user A stays in the same room, even if the user B and the user C stay in the same room, the information is not presented to them. In other words, in this case, the recommendation list 41 is not presented to the user A, the user B, and the user C.

In such a manner, the conversation of the users is monitored, the users who share the information obtained from the conversation in common are set, and when only the users who share the information stay, the information is suitably presented to the users who share the information.

### <Configuration of Information Acquiring Section>

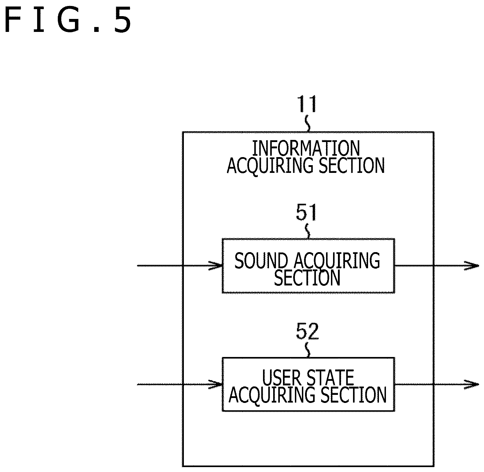

A description will now be given with respect to configurations of the information acquiring section 11 and the information processing section 12 which execute the pieces of processing as described above. Firstly, with reference to FIG. 5, a description will now be given with respect to the configurations of the information acquiring section 11.

The information acquiring section 11 includes a sound acquiring section 51 and a user state acquiring section 52. The sound acquiring section 51, for example, includes a microphone, and a plurality of sound acquiring sections 51 is installed in the home. For example, there are rooms such as a living room, a dining, a kitchen, a bedroom, a child's room, and an entrance in the home. The microphone is installed in each of these rooms. Thus, the conversations of the users are collected, and are recorded as may be necessary.

The user state acquiring section 52, for example, acquires the information used to specify the users who have the conversation, the information used to specify a direction in which the user faces, and the like. The user state acquiring section 52, for example, includes an imaging section, and various kinds of sensors, and a plurality of user state acquiring sections 52 is installed in the home. Same as the sound acquiring sections 51, the user state acquiring sections 52 are installed in the living room, the dining, the kitchen, the bedroom, the child's room, the entrance, and the like within the home on a room-by-room basis. Thus, information used to specify the user who stays in the room of interest, and information associated with the line-of-sight direction or the like of the user who stays in the room of interest are collected.

### <Configuration of Information Processing Section>

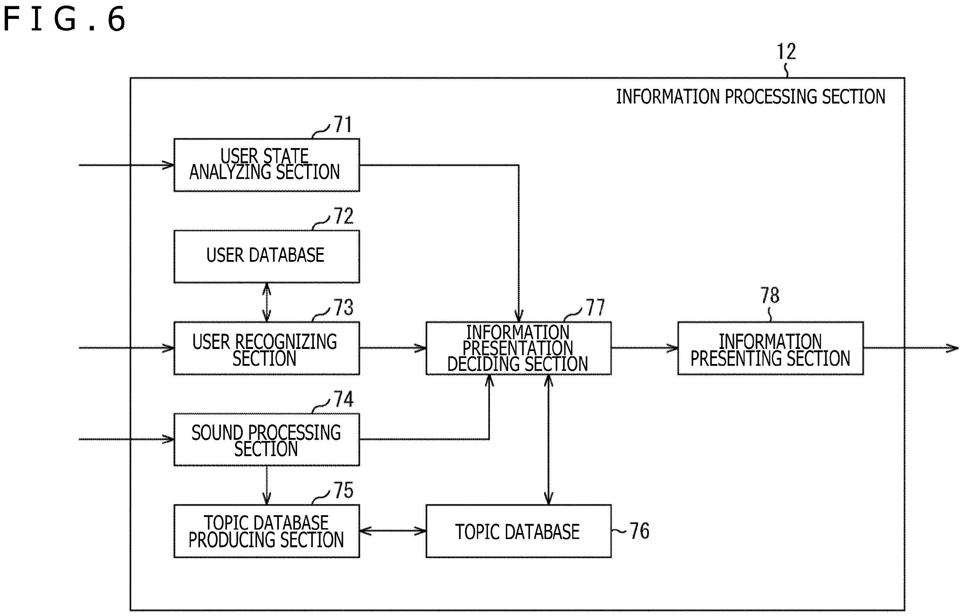

The information acquired in the information acquiring section 11 is supplied to the information processing section 12 and is processed therein. With reference to FIG. 6, a description will now be given with respect to the configuration of the information processing section 12.

The information processing section 12 includes a user state analyzing section 71, a user database 72, a user recognizing section 73, a sound processing section 74, a topic database producing section 75, a topic database 76, an information presentation deciding section 77, and an information presenting section 78.

It should be noted that in the case where as depicted in FIG. 2, the configuration is adopted in which the information acquiring section 11 and the information processing section 12 exchange the data with each other through the out-of-home network 31, a part of the information processing section 12 depicted in FIG. 6 may be installed in the home.

That is, a part of or all (in case of FIG. 1) of the information processing section 12 can be configured as if it is installed in the home. For example, the database managing the data such as the user database 72 or the topic database 76 may be installed in the home, and other parts thereof may be installed out of home.

Alternatively, the database managing the data such as the user database 72 or the topic database 76 may be made cloud and other parts thereof may be installed in the home.

Whether the sections of the information processing section 12 are installed in the home or out of the home is a configuration which can be suitably changed.

The user state analyzing section 71 analyzes what is the situation in the user such as the situation in which the user has the conversation or the situation in which the user faces directions of other users by using the information acquired in the user state acquiring section 52. The analysis result is supplied to the information presentation deciding section 77. In addition, although not illustrated, the analysis result is also supplied to the topic database producing section 75 as may be necessary.

The user database 72 is a database for identifying the user. For example, the information such as a user name (for example, a name of a family), and an age, face data, voice data or the like of the user which is used to specify the user are stored in the user database 72 as may be necessary. In addition, schedule of the user, a friend list and the like may also be stored in the user database 72.

The user recognizing section 73 recognizes the user who stays in the predetermined room by using the information acquired from the sound acquiring section 51 and the user state acquiring section 52 (FIG. 5) by referring to the user database 72. The recognition result is supplied to the information presentation deciding section 77. In addition, although not illustrated, the recognition result is also supplied to the topic database producing section 75 as may be necessary.

The sound processing section 74 analyzes the meaning of the sound acquired in the sound acquiring section 51 (FIG. 5), extracts the keyword, and sets the topic of the conversation. The processing result (such as the keyword) is supplied to the information presentation deciding section 77. In addition, the processing result is also supplied to the topic database producing section 75.

The topic database producing section 75 produces the topic database 76. The topic database 76, as described above, is the database in which the contents of the conversation of the users and the users who share the conversation contents (shared information) in common are accumulated so as to be associated with each other.

The topic database producing section 75 registers the extracted keyword and the set topic in the topic database 76, and sets the users who share the topic which should be registered and registers the users so as to be associated with each other.

That is, the topic database producing section 75 registers the shared information and the user (sharer) who shares the shared information in the topic database 76 so as to be associated with each other.

The information presentation deciding section 77 executes processing for presenting the information of the shared information from the user state analyzing section 71, the user recognizing section 73, and the sound processing section 74 when only the users who may share the information in common stay by referring to the topic database 76.

The information presenting section 78 presents the information to the user based on the decision result of the information presentation deciding section 77. The information presenting section 78 performs the inquiry to the external service presenting section 21, and presents the information to which the retrieved information is added to the user, or presents the information for which some sort of processing is executed to the user.

For example, as described above by referring to FIG. 3, when the user B and the user C have the conversation about the present for the birthday of the user A, the sound processing section 74, for example, extracts the keywords (topics) such as "user A," "birthday," "present," "tie," and "handkerchief" the data associated with which is in turn supplied to the topic database 76.

In addition, the user recognizing section 73 supplies the recognition result that the persons who have such conversation are the user B and the user C to the topic database producing section 75.

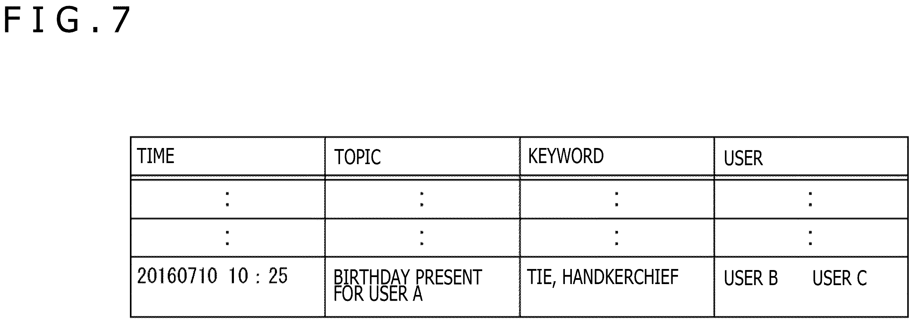

The topic database producing section 75 stores the pieces of data associated with the topic, the keyboard, and the users supplied thereto in the topic database 76 so as to be associated with the users. For example, the topic database 76 as depicted in FIG. 7 is produced.

With reference to FIG. 7, items of "time," "topic," "keyword," and "user" are set in the topic database 76. Matters described in these items are stored in the topic database 76 so as to be associated with one another.

Date and time when the user had the conversation, in other words, the data and time when the topic and the keyword were set (extracted) are described in the items of "time."

The information representing the contents (topics) of the conversation made between the users is described in the item of "topic." The information used to manage and identify the conversation contents such as the abstract of the conversation contents and the title of the conversation contents is described in a column of "topic."

The keyword extracted from the conversation which the users had is described in the item of "keyword." The extracted keyword can be described in the column of the topic, and thus the topic database 76 in which there is no keyword can be produced.

In this case, the description will be continuously given on the assumption that the topic database 76 having the item of the keyword is produced and the keyword (information) written to the item of the keyword is information which is suitably presented to the user.

The data associated with the users who had the conversation is described in the item of "user." In other words, the data associated with the sharers who share the shared information which is described in the columns of the "topic" and the "keyword" is described in the item of the "user."

It should be noted that in addition to the users who had the conversation, the data associated with the user who stayed on-site may also be described. The reason for this is because it is considered that when the conversation about a predetermined topic was made in a predetermined room, the user who stayed in the predetermined room, even if he/she did not participate the conversation, he/she was held in a state of being able to listen to the conversation, and the conversation contents need not to keep a secret for the user who was kept in the state of listening to such conversation, and the user of interest may share the conversation contents.

Therefore, a description will be continuously below given on the assumption that when the conversation about the predetermined topic is made in the predetermined room, the users who stay in the predetermined room is described in the column of the "user" of the topic database 76.

The (information additionally described in) topic database 76 depicted in FIG. 7, for example, is a database which is produced when the user B and the user C have the conversation at a time point of "one month before the birthday of the user A," which is described with reference to FIG. 3 and FIG. 4.

Referring to the topic database 76 depicted in FIG. 7, the information regarding "20160710 10:25" is described in the item of "time," the information regarding "present for birthday of user A" is described in the item of "topic." In addition, the information regarding "tie, handkerchief" is described in the item of "keyword," and the information regarding "user B, user C" is described in the item of "user."

At a time point of "one month before the birthday of the user A" described with reference to FIG. 3 and FIG. 4, when the user B and the user C have the conversation, the conversation is monitored, resulting in that the sound processing section 74 (FIG. 6) acquires the conversation which the user B and the user C have. The sound processing section 74 analyzes the conversation being monitored, and thus extracts the keywords of "tie," "handkerchief," and sets the topic of "present for birthday of user A."

It should be noted that the topic database producing section 75 may perform a part of or all the extraction of the keyword, and the setting of the topic.

The topic database producing section 75 associates the information regarding the date and time when the conversation is made (in this case, 20160710 10:25), the topic of "present for birthday of user A," and the keywords of "tie" and "handkerchief" with each other and additionally registers those to the topic database 76.

In addition, the user recognizing section 73 supplies the information as well on "user B," "user C" as the information regarding the users (the users staying in the predetermined room) who have the conversation to the topic database producing section 75. The topic database producing section 75 additionally registers such user information as the sharer information so as to be associated with the additionally registered information regarding the topic and the like (shared information).

It is assumed that at a time point when such a topic database 76 is produced and time has elapsed, in this case, at a time point when "two weeks before the birthday of the user A," it is detected that the user B and the user C have the conversation in the predetermined room. That is, it is assumed that the state as depicted in FIG. 3 is detected.

The user recognizing section 73 monitors the users who stay in the predetermined room, and supplies a monitoring result to the information presentation deciding section 77. The user recognizing section 73 detects that the user B and the user C stay in the predetermined room, and supplies a recognition result to the information presentation deciding section 77.

The information presentation deciding section 77 detects that the user B and the user C stay together from the information from the user recognizing section 73. In addition, if information associated with the user other than the user B and the user C is not supplied, then, it is detected that the user other than the user B and the user C does not stay.

The information presentation deciding section 77 finds out the column in which the user B and the user C are described in the column of "user" by referring to the topic database 76, thereby detecting the information which the user B and the user C share in common. In this case, the topic of "present for birthday of user A" is detected as the information which the user B and the user C share in common.

When such detection is performed, the information presentation deciding section 77 sends a decision result that the information associated with the topic of "present for birthday of user A" is presented to the user B and the user C, and notifies the information presenting section 78 of the decision result. By performing such decision, as described with reference to FIG. 3, the information is presented in the form of, for example, the recommendation list 41 to the user B and the user C.

In such a manner, the information useful for the user is presented at the suitable timing when only the user who may share the information stays.

On the other hand, it is assumed that at a time point when the topic database producing section 75 as depicted in FIG. 7 is produced and the time has elapsed, in this case, at the time point of "two weeks before the birthday of the user A," the state is detected in which the user A, the user B and the user C have the conversation in the predetermined room. That is, it is assumed that the state as depicted in FIG. 4 is detected.

The user recognizing section 73 detects that the user A, the user B and the user C stay in the predetermined room. The information presentation deciding section 77 detects that the user A, the user B and the user C stay in the predetermined room together from the information from the user recognizing section 73.

By referring to the user database 76, the information presentation deciding section 77 finds out the column in which the user A, the user B and the user C are described in the column of "user," thereby detecting the information which the user A, the user B and the user C share in common. In this finding-out, the topic of "the present for the birthday of the user A" is not detected as the information which the user A, the user B and the user C share in common.

Therefore, since in the information presentation deciding section 77, the decision result that the information associated with the topic of "the present for the birthday of the user A" is presented is not sent, as described with reference to FIG. 4, the information (recommendation list 41) is not presented.

In such a manner, when only the users who share the predetermined information stay in the predetermined space, the shared information is presented to the users who share the information of interest. However, when the user other than the users who share the predetermined information also stays in the predetermined space, the information is not presented.

Therefore, although the information is shared between the persons who have the conversation, the person who does not participate in the conversation can be prevented from sharing the information.

### <Update of Topic Database>

The data stored in the topic database 76 is updated when a predetermined condition is fulfilled (when a predetermined situation occurs). A description will now be given with respect to the update of the topic database 76.

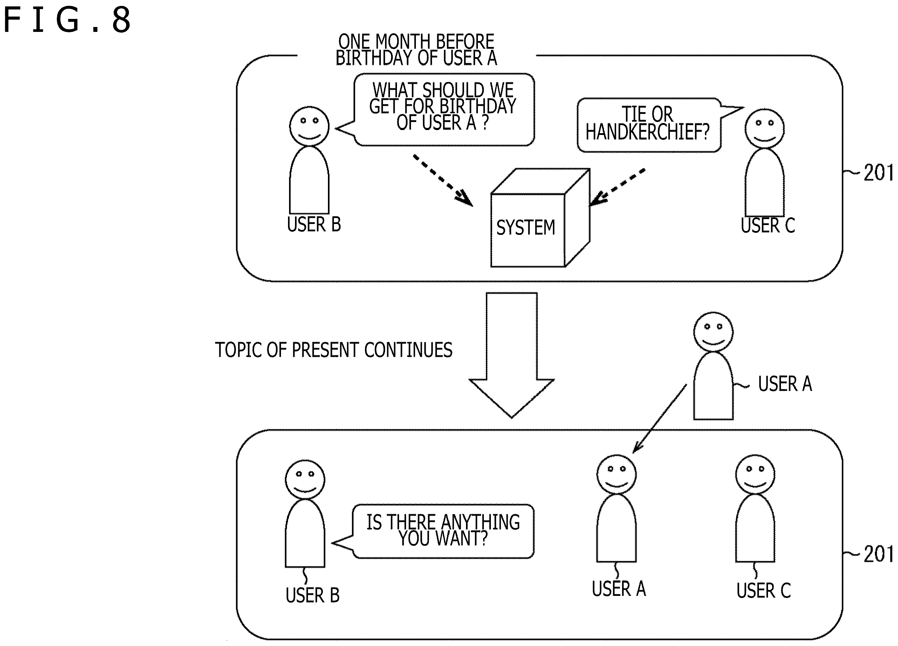

FIG. 8, similarly to the situation depicted in FIG. 3 (FIG. 4), depicts the situation in which "one month before the birthday of the user A," the user B and the user C have the conversation about "present for birthday of user A." In such a situation, as described above, the topic database 76 as depicted in FIG. 7 is produced.

It is assumed that in FIG. 8, the user B and the user C have the conversation in a room 201. It is also assumed that when the user B and the user C have the conversation about "present for birthday of user A" in the room 201, the user A enters the room 201.

At this time, in the case where the user B and the user C continuously have the conversation about "present for birthday of user A," for example, in the case where the user B asks the user A a question of "is there anything you want?," the topic database 76 is updated.

That is, in this case, when the user A who did not participate in the conversation at a time point of the start of the conversation of interest newly participates in the conversation when the topic continues without being changed, the topic of interest can be decided as the topic which the user A who newly participates in the conversation may also share in common.

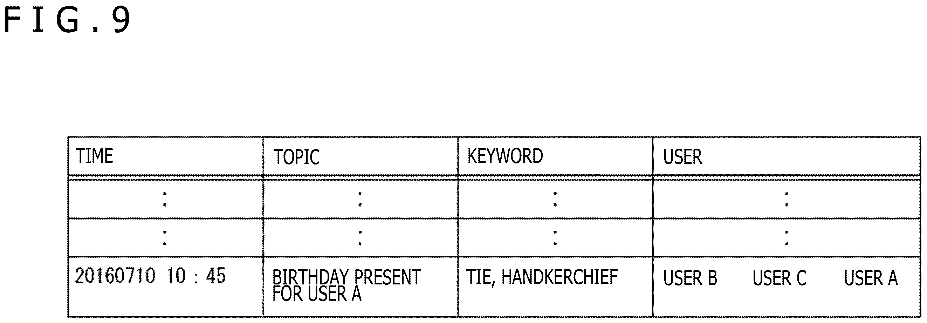

Therefore, such information is rewritten with the corresponding information in the topic database 76. That is, in this case, as depicted in FIG. 9, "user A" is added to the column of "user." In addition, the time information in the column of "time" is updated to "10:45."

In such a manner, in the case where the topic continues, when the new user participates in the topic of interest, the information, corresponding to the topic of interest, in the topic database 76 is updated.

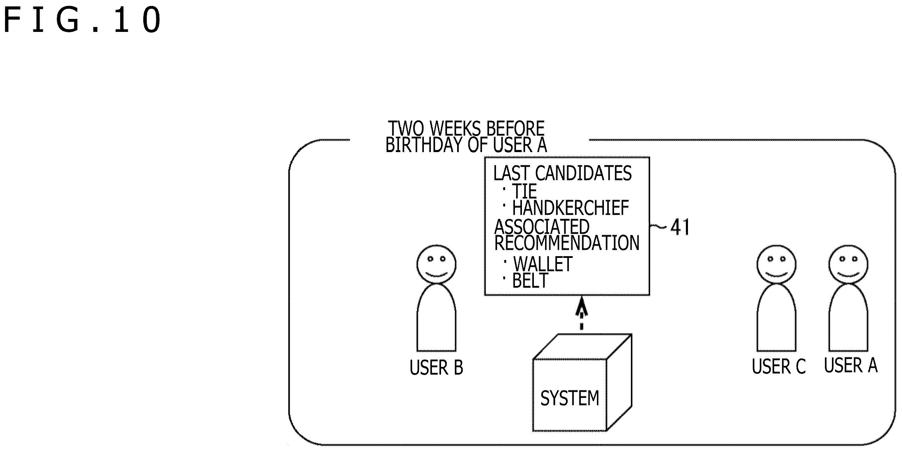

In the case where after the topic database 76 is updated in such a manner, for example, as depicted in FIG. 10, the situation occurs such that "two weeks before the birthday of the user A," the user A, the user B and the user C stay in the same room, the recommendation list 41 is presented to the user A, the user B and the user C.

Incidentally, the situation described with reference to FIG. 8 is described by giving, as an example, the case where when the user B and the user C continue the conversation, the user A appears. However, even if such a situation is not set, when the similar situation occurs, the topic database 76 is updated.

For example, when "three weeks before the birthday of the user A," the user B and the user C start to have the conversation again about the topic of "present for birthday of user A" and have the conversation of interest, the user A appears. However, even in the case as well where the topic is not changed, the topic database 76 is updated.

That is, the wording "the conversation continues" means not only the case where the conversation temporally continues, but also the case where the users have time free, the users discuss the same topic again.

In addition, the description given with reference to FIG. 8 is given by exemplifying the case where the topic is "present for birthday of user A," and the user A included in the topic appears. However, when a user other than the user A, for example, the user D appears, the user D is newly added to the column of "user" of the topic database 76.

That is, even if when the users have the conversation about the predetermined topic, the user in which the setting that the conversation contents are shared is not made, when the conversation about the predetermined topic is continuously made, the information associated with the user in which the setting of the sharing is not made is changed to the setting that the sharing is performed.

In such a manner, when during the conversation, another user appears, if the conversation is not interrupted, the user who participates in the topic in the middle of the conversation is also set to the sharer who shares the topic.

It should be noted that when the topic database 76 is updated in such a manner, the user may be notified of this effect. In addition, in the case where the notification is performed, the notification is performed for the users who are set to the sharers before the update. By performing the notification, the users can recognize that the topic database 76 is updated, in other words, that the topic about which the users have the conversation now can be shared among the users who have the conversation now.

In addition, in the case where such recognition is performed and as a result, the users decide that the user which is newly set as the sharer is unsuitable in terms of the sharer, an instruction can be issued so as not to update the topic database 76. By enabling such an instruction to be issued, it becomes possible for the users to set the suitable sharer.

In addition, the produced topic database 76 is suitably browsed or corrected, resulting in that the update by the user may be performed. The update of the topic database 76 by the user enables the addition or deletion of the shared information (topic), or the addition or deletion of the sharer to be performed.

Such update is performed by the user having the authority. For example, the update is performed by a manager (family head or the like) who manages the information processing system. In addition, a mechanism with which only the topic, in which the user himself/herself is registered as the sharer can be browsed or edited may be provided. In addition, a mechanism with which the user who firstly begins to talk about the topic is given the authority by which the information regarding the topic of interest may also be provided.

In addition, a group may be produced, and the topic database 76 may be managed by the group. For example, the group is a parent group, a child group or the like, and the topic associated with the group of interest may be managed.

### <With Respect to Case Where Topic Database is not Updated>

Although the description has been given with respect to the case where the topic database 76 is not updated, here, a description will be given with respect to the case as well where the topic database 76 is not updated.

FIG. 10 depicts a situation in which similarly to the situation depicted in FIG. 8, "one month before the birthday of the user A," the user B and the user C have the conversation about "present for birthday of user A." In such a situation, as described above, the topic database 76 as depicted in FIG. 7 is produced.

It is assumed that in FIG. 10, the user B and the user C have the conversation in the room 201. It is also assumed that when in the room 201, the user B and the user C have the conversation about "present for birthday of user A," the user A enters the room 201.

At this time, in the case where the user B and the user C interrupt the conversation about "present for the birthday of the user A," the topic database 76 is not updated. In such a manner, in the case where when the user A who did not participate in the conversation of interest at a time point of start of the conversation enters the room 201, the conversation of interest is interrupted, it is possible to decide that the topic of interest is the topic which should not be shared with the user A entering the room 201.

Therefore, since the corresponding information in the topic database 76 need not to be rewritten, the topic database 76 is not updated. It should be noted that only the time information may be updated.

In the case where the topic database 76 is not updated in such a manner, at a subsequent time point, as described with reference to FIG. 3, the information is presented to the user B and the user C. However, as described with reference to FIG. 4, the situation is such that the information is not presented to the user A.

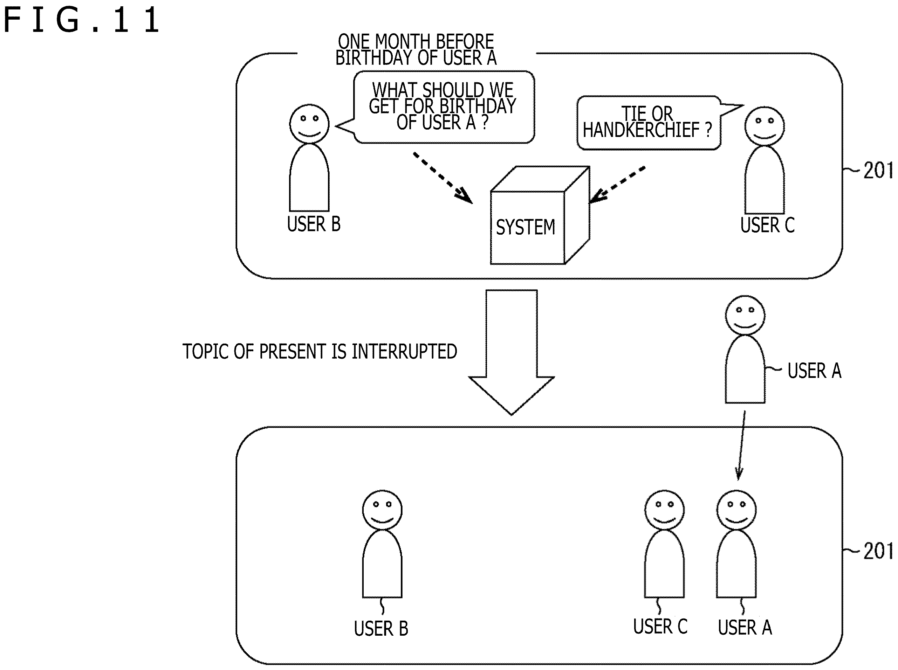

Incidentally, similarly to the case described with reference to FIG. 8, the situation described with reference to FIG. 11 has been described by giving, as an example, the case where when the user A appears, the user B and the user C interrupt the conversation. However, even if such a situation is not provided, when a similar situation occurs, the topic database 76 is not updated.

For example, in the case as well where when "three weeks before the birthday of the user A," the user B and the user C begin the conversation again about the topic of "present for birthday of user A" to have the conversation of interest, even in the case where the conversation is interrupted, or the topic is changed due to the appearance of the user A, the topic database 76 is not updated.

That is, the wording "the conversation is interrupted" includes not only the case where when the conversation is temporarily continuously performed, but also the case where even when the users have time free, the users have the conversation about the same topic again, and the conversation is interrupted when the discussion is made again.

In addition, in the description with reference to FIG. 11, the description has been given by giving, as example, the case where the topic is "present for birthday of user A," and the user A included in the topic appears. However, in the case where when a user other than the user A, for example, a user D appears, the conversation is interrupted, the topic database 76 is not updated.

That is, in the case where when the users have the conversation about the predetermined topic, the user in which the sharing of the conversation contents is not set appears, and thus the conversation about the predetermined topic is interrupted, the processing for updating the topic database 76 is not executed.

In such a manner, if the conversation is interrupted when during the conversation, another user appears, then, the user of interest is excluded from the sharer of the topic.

### <Another Update of Topic Database>

Next, a description will be given with respect to an example of processing for another update of the topic database 76.

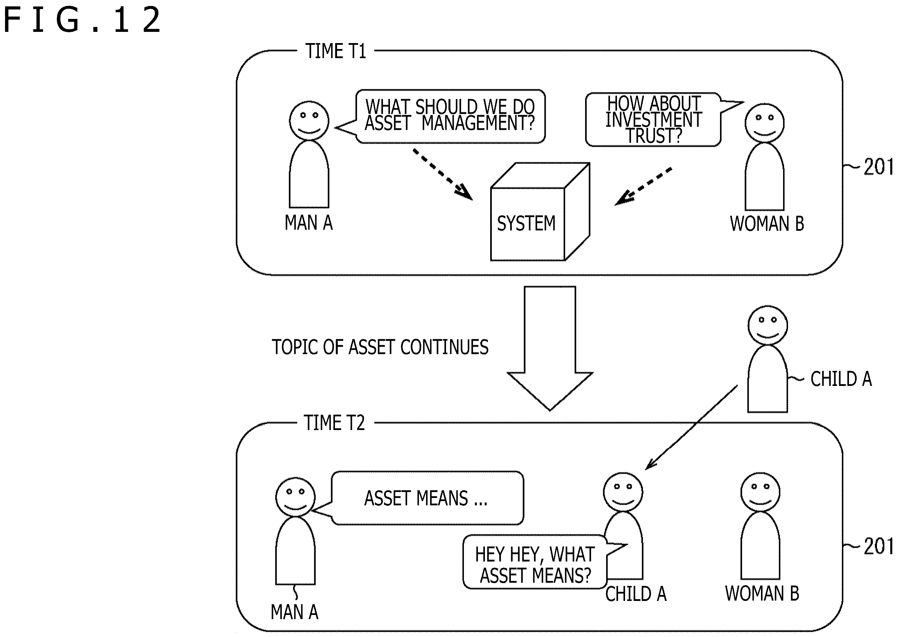

A description will now be given with respect to the case where it is decided whether or not the setting is changed to the setting in which the information is shared depending on whether or not the user is a man or a woman with reference to FIG. 12 to FIG. 15.

In FIG. 12, two users have the conversation about the asset. Here, the two users are a man and a woman, for example, a father and a mother, and are described as a man A and a woman B, respectively. An upper figure of FIG. 12 depicts a situation in which at time T1, the man A and the woman B have the conversation about the asset within a room 201.

At the time T1, the man A talks to say that "what should we do asset management" to the woman B. The woman B responds to say that "how about investment trust" to the man A. Such conversation between the man A and the woman B is monitored by the information processing system and is suitably registered in the topic database 76.

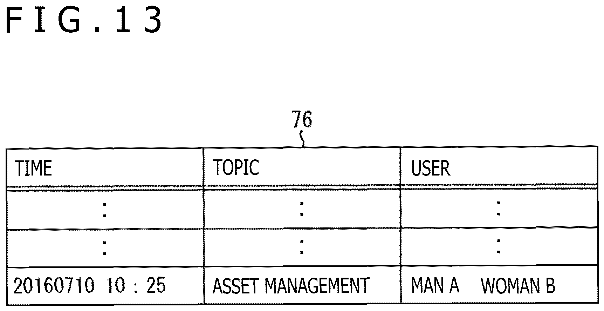

For example, the topic database 76 as depicted in FIG. 13 is produced. Information regarding "20160710 10:25" is described in the item of "time" of the topic database 76 depicted in FIG. 13, information regarding "asset management" is described in the item of "topic," and information regarding "man A, woman B" is described in the item of "user."

It should be noted that in the topic database 76 as well depicted in FIG. 13, similarly to the case of the topic database 76 depicted in FIG. 7, the item of "keyword" may be provided, and the keywords extracted from the conversation may be suitably written to the item of "keyword." In this case, the description will be continuously given by exemplifying the topic database 76 in which the item of "keyword" is deleted.

At time T2, when the man A and the woman B have the conversation about the asset, a child A enters the room 201. In addition, the child A asks to say that "hey hey, what asset means?" to the man A, and the man A responds to say that "the asset means····" to the child A.

At the time T2, even when the child A enters the room 201, the man A and the woman B continuously have the conversation about the asset. For example, as described with reference to FIG. 8 described above, in the case where the user participates in the predetermined topic from the middle, the user of interest who participates in the predetermined topic from the middle is also additionally registered as the sharer who shares the information associated with the topic of interest.

Therefore, in the case where such processing is also applied to the case as well of the situation being described with reference to FIG. 12, since even when the child A enters the room 201, the man A and the woman B continuously have the conversation about the asset, the child A is added as the user who shares the topic of "asset management" in common. That is, the topic database 76 is updated.

However, it is considered that the topic of "asset management" is inappropriate as the topic which is shared with the child. In such a manner, the setting in which the sharing is performed is not changed depending on the topic or depending on the user (the topic database 76 is not updated).

That is, the topic database 76 is not updated even at the time T2, and thus as depicted in FIG. 13, the state is maintained in which the man A and the woman B are described in the item of the user.

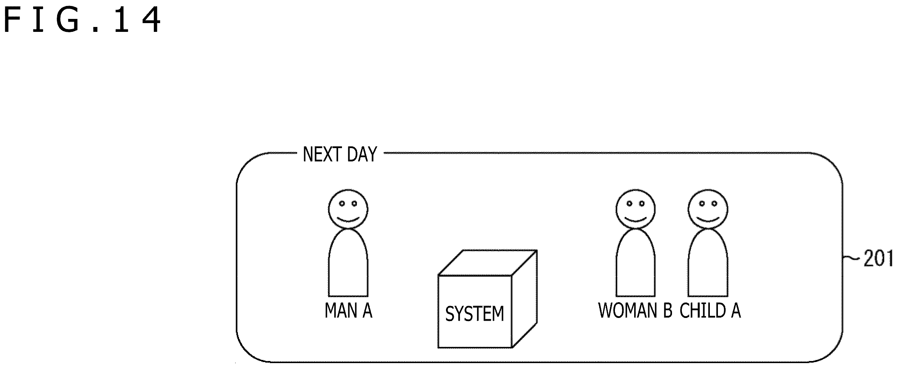

Since the topic database 76 is not updated in such a manner, for example, even when on the next day following the day when the conversation as depicted in FIG. 12 was performed, as depicted in FIG. 14, the man A, the woman B, and the child A stay in the room 201, the presentation of the information is not performed from the information processing system.

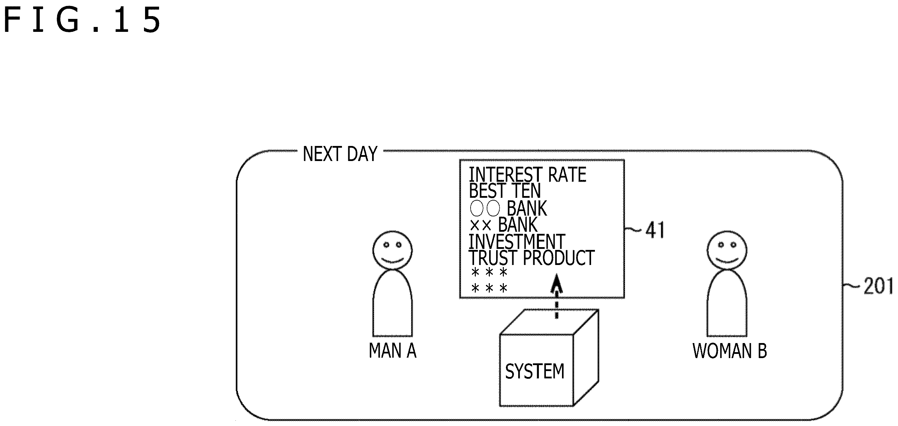

On the other hand, when on the next day following the day in which the conversation as depicted in FIG. 12 was performed, as depicted in FIG. 15, only the man A and the woman B stay in the room 201, the information processing system presents the information. For example, in an example, depicted in FIG. 15, the recommendation list 41 in which information such as "interest rate best ten oo bank ×× bank interest trust product···" is presented to the man A and the woman B.

Even in the case where the user who participates in the conversation of the predetermined topic from the middle stays, when the user of interest, for example, in the example described above, belongs to the attribute of the child, the user of interest is not additionally registered as the user who shares the information associated with the predetermined topic.

Incidentally, for example, in the case where the user who participates in the conversation of the predetermined topic from the middle is the child, the setting may be performed in such a way that the topic database 76 is not updated irrespective of the topic, or may be performed in such a way that the topic database 76 is not updated depending on the topic.

In the case where the user who participates in the conversation of the predetermined topic from the middle is the child, and thus the setting is performed in such a way that the topic database 76 is not updated depending on the topic, for example, the child is not added to the topic such as "asset," "health" or "security," and the child is added to the topic such as "travel," "school" or "meal." In such a manner, it may be set whether the child is added or not added depending on the topic.

In addition, in the case where such a procedure is adopted, the topic database 76 may be provided with information used to decide whether or not the topic of interest is the topic in which the child may be added, for example, a flag, and the flag and the topic of interest may be managed so as to be associated with each other.

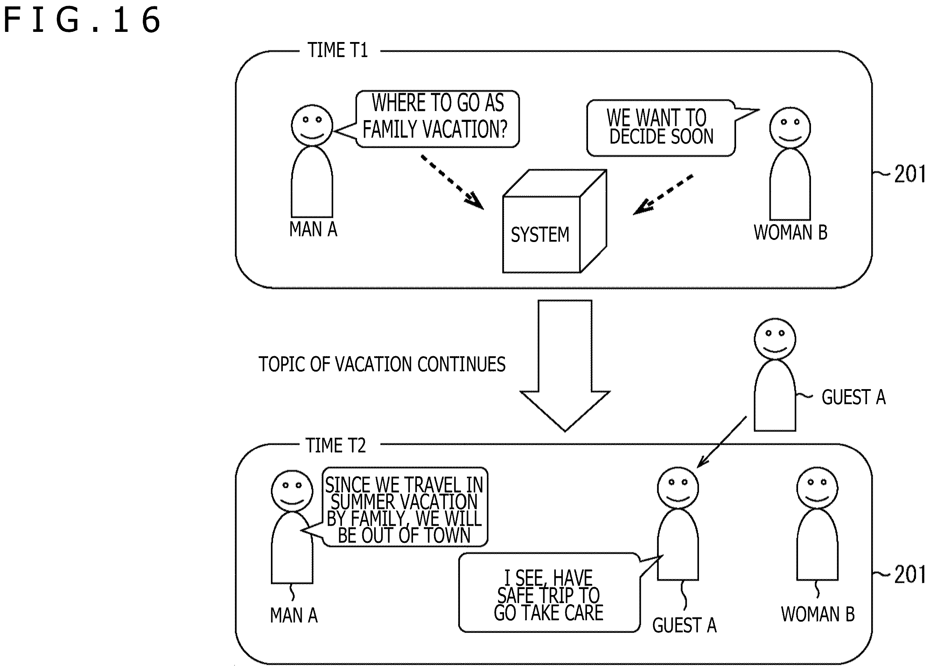

A description will now be given with respect to the case where it is decided whether or not the setting is changed to the setting in which the information is shared depending on whether the user is a member of a family or a guest with reference to FIG. 16 to FIG. 19.

In FIG. 16, two users have the conversation about travel. Here, the two users are the man and the woman, for example, the father and the mother and are described as the man A and the woman B, respectively. An upper figure of FIG. 16 depicts a situation in which at time T1, the man A and the woman B have the conversation about the travel within the room 201.

At the time T1, the man A talks to say that "where to go as a family vacation?" to the woman B. The woman B responds to say that "we want to decide soon" to the man A. Such conversation between the man A and the woman B is monitored by the information processing system and is suitably registered in the topic database 76.

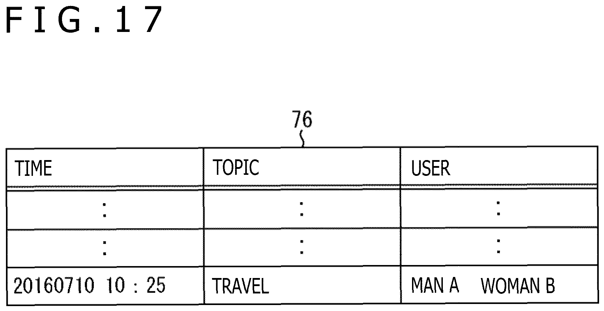

For example, the topic database 76 as depicted in FIG. 17 is produced. Information regarding "20160710 10:25" is described in the item of "time" of the topic database 76 depicted in FIG. 17, information regarding "travel" is described in the item of "topic," and information regarding "man A, woman B" is described in the item of "user."

At time T2, when the man A and the woman B have the conversation about the travel, a guest A enters the room 201. In addition, the man A talks to say that "since the travel in summer vacation by family, we will be out of town" to the guest A, and the guest A responds to say that "I see, have a safe trip to go take care" to the man A.

At the time T2, even when the guest A enters the room 201, the man A and the woman B continuously have the conversation about the travel. For example, as described with reference to FIG. 8 described above, in the case where the user participates in the predetermined topic from the middle, the user of interest who participates in the predetermined topic from the middle is also additionally registered as the sharer who shares the information associated with the topic of interest.

Therefore, in the case where such processing is also applied to the case as well of the situation being described with reference to FIG. 16, since even when the guest A enters the room 201, the man A and the woman B continuously have the conversation about the travel, the guest A is added as the user who shares the topic of "travel" in common. That is, the topic database 76 is updated.

However, it is considered that the topic of "travel" is inappropriate as the topic which is shared with the guest. The reason for this is because the users who will go on a travel are the man A and the woman B, and the guest A will not go on a travel. In such a manner, the setting of interest is not changed to the setting in which the sharing is performed depending on the topic or depending on the user (the topic database 76 is not updated).

That is, the topic database 76 is not updated even at the time T2, and thus as depicted in FIG. 17, the state is maintained in which the man A and the woman B are described in the item of the user.

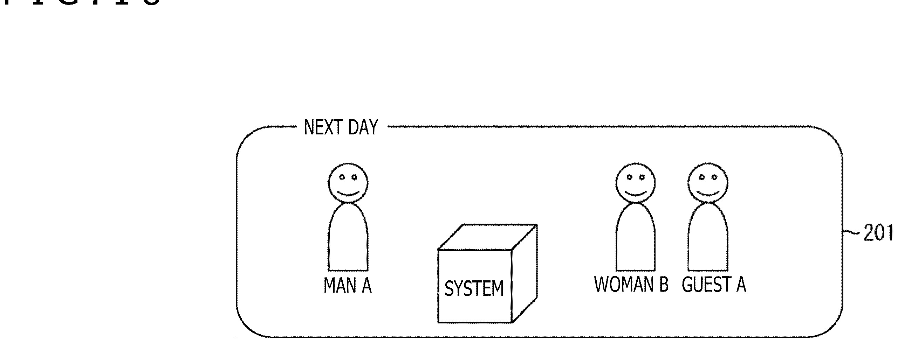

Since the topic database 76 is not updated in such a manner, for example, even when on the next day following the day when the conversation as depicted in FIG. 16 was performed, as depicted in FIG. 18, the man A, the woman B, and the guest A stay in the room 201, the presentation of the information is not performed from the information processing system.

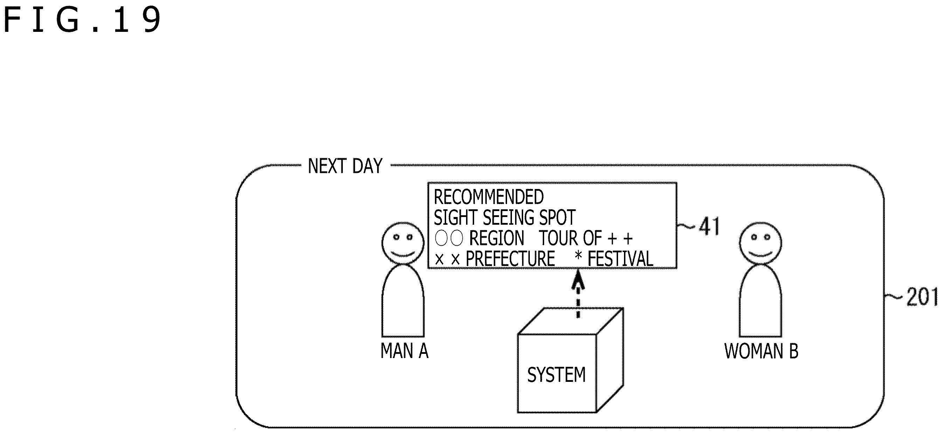

On the other hand, when on the next day following the day in which the conversation as depicted in FIG. 16 was made, as depicted in FIG. 19, only the man A and the woman B stay in the room 201, the information processing system presents the information. For example, in an example depicted in FIG. 19, a recommendation list 41 in which information such as "recommended sightseeing spot ○○ region tour of ++ ×× prefecture •• festival" is presented to the man A and the woman B.

Even in the case where the user who participates in the conversation of the predetermined topic from the middle stays in such a manner, when the user of interest, for example, in the example described above, belongs to the attribute of the guest, the user of interest is not additionally registered as the user who shares the information associated with the predetermined topic.

Incidentally, for example, in the case where the user who participates in the conversation of the predetermined topic from the middle is the guest, the setting may be performed in such a way that the topic database 76 is not updated irrespective of the topic, or may be performed in such a way that the topic database 76 is not updated depending on the topic.

In the case where the user who participates in the conversation of the predetermined topic from the middle is the guest, and the setting is performed in such a way that the topic database 76 is not updated depending on the topic, for example, the guest is not added to the topic such as "travel," "health" or "security," and the guest is added to the topic such as "weather," "party" or "meal." In such a manner, it may be set whether the guest is added or not added depending on the topic.

In addition, in the case where such a procedure is adopted, the topic database 76 may be provided with information used to decide whether or not the topic of interest is the topic in which the guest may be added, for example, a flag, and the flag and the topic of interest may be managed so as to be associated with each other.

### <Processing Flow>

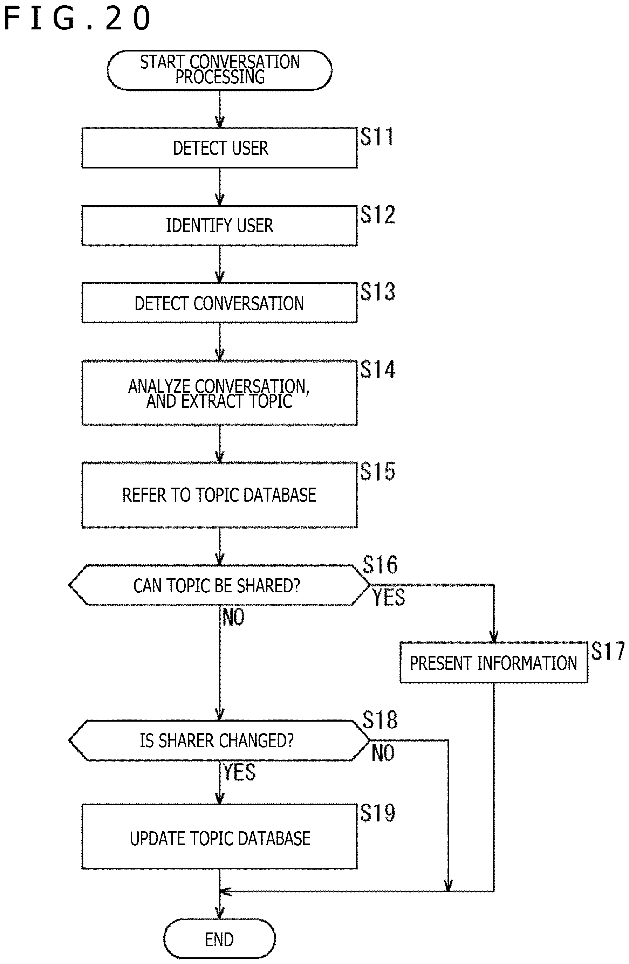

The processing described above will be described again with reference to a flow chart of FIG. 20. Processing of a flow chart depicted in FIG. 20 is mainly executed in the information processing section 12 (FIG. 6).

In Step S11, the user recognizing section 73 detects the user who stays in the room. In Step S12, the user recognizing section 73 identifies the detected user by referring to the user database 72. For example, the user is identified as a mother, a father, a child, or a guest.

In Step S13, the sound processing section 74 starts to monitor the conversation to detect the conversation. In the case where the conversation is detected, in Step S14, the conversation of interest is analyzed. The conversation is analyzed, thereby leading to that the keyword is extracted, the topic when the keyword of interest is added to the topic database 76 is set, and so forth.

In Step S15, the information presentation deciding section 77 refers to the topic database 76. In Step S16, the information presentation deciding section 77 decides whether or not the topic can be shared.

For example, as described with reference to FIG. 3, in the case where it is recognized that the user B and the user C stay in the predetermined room, the topic in which the user B and the user C are set as the sharers is read out by referring to the topic database 76. At this time, in the case where there is no topic (information) to be read out, in Step S16, it is decided that it cannot share the topic, and the processing proceeds to Step S18.

On the other hand, in the case where there is the topic (information) to be read out, in Step S16, it is decided that the topic can be shared, and the processing proceeds to Step S17. In Step S17, the information is presented to the users. For example, as described with reference to FIG. 3, the information associated with the topic is presented as the recommendation list 41 to the user B and the user C.

On the other hand, in Step S16, in the case where it is decided that it cannot share the topic, the processing proceeds to Step S18.

In Step S18, it is decided whether or not the sharer is changed. For example, as described with reference to FIG. 8, in the case where when the users have the conversation in the predetermined topic, that is, there is the user who has participated in the conversation from the middle, the user who has participated in the conversation from the middle is newly set as the sharer. In Step S18, it is decided whether or not such a sharer is changed (whether or not the sharer is newly added to the topic database 76).

In Step S18, in the case where it is decided that the sharer is changed, the processing proceeds to Step S19, and the topic database 76 is updated.

On the other hand, in the case where in Step S18, it is decided that the sharer is not changed, the processing in Step S19 is skipped and the processing in the flow chart depicted in FIG. 20 is ended.

The information processing section 12 executes such pieces of processing. It should be noted that the flow of the processing herein is merely an example, and the pieces of processing may be executed in parallel, or may be executed in the changed order.

The user is usually detected, and whenever the user is detected, the processing of the flow chart depicted in FIG. 20 is executed. As a result, it is possible to cope with such a dynamic change as well that the user goes in and out from the predetermined room. In addition, such processing as to hold the state every user may also be executed.

### <With Respect to Other Sharing Setting>

Although the embodiment has been described by giving the example in which the conversation is monitored, the present technology can also be applied to the case where a matter other than the conversation is monitored. Here, a description will now be given with respect to the case where a matter other than the conversation is monitored.

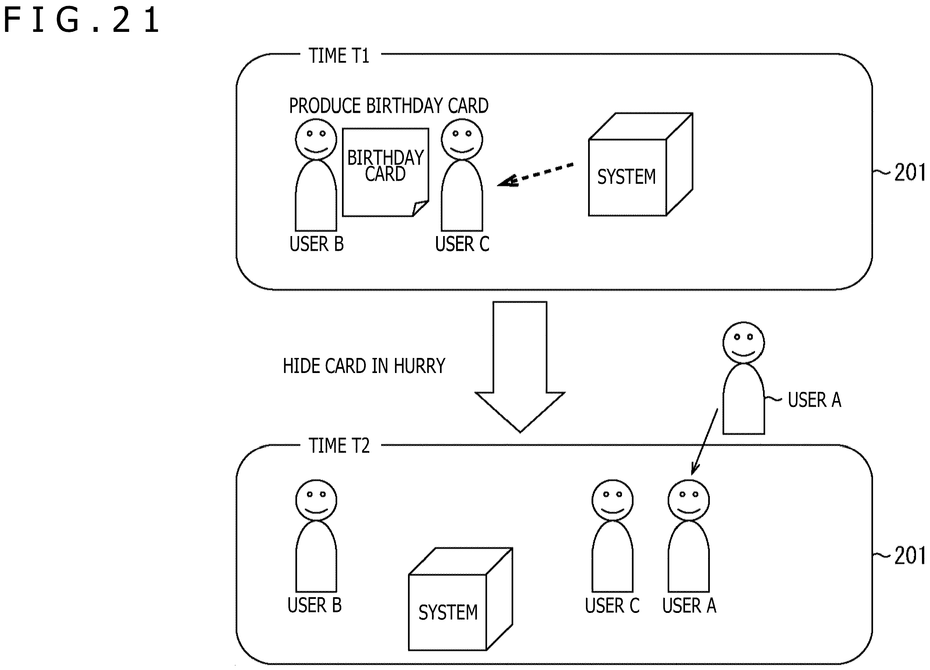

FIG. 21 is a view for explaining the case where the action of the user is monitored, and the topic is produced with the action as the topic, thereby setting the sharer.

At time T1, the user B and the user C stay in the room 201. The user B and the user C are making a birthday card. The information processing system monitors such actions of the user B and the user C. For example, an image is photographed, and the image is analyzed to detect that something is being made. Then, it is detected that the something being made is the birthday card through the image matching or the like.

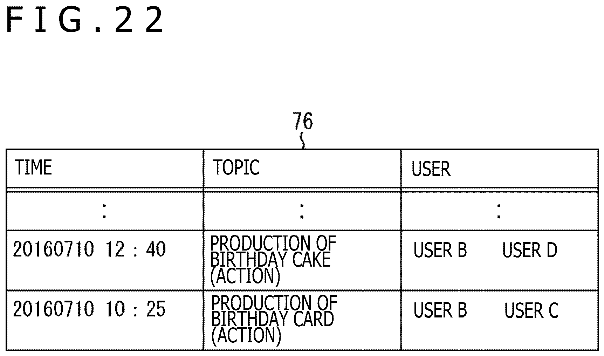

The information processing system monitors the actions of the user B and the user C, thereby producing the topic database 76 as depicted in FIG. 22. Referring to the topic database 76 depicted in FIG. 22, the information regarding "20160710 12:40" is described in the item of "time," the information regarding "production (action) of birthday cake" is described in the item of "topic," and the information regarding "user B, user D" is described in the item of "user."

In addition, in the topic database 76, the information regarding "20160710 10:25" is described in the item of "time," the information of "production (action) of birthday card" is described in the item of "topic," and the information regarding "user B, user C" is described in the item of "user."

At time T2, when the user A and the user B are producing the birthday card, the guest A enters the room 201. The user B or the user C who notices that the guest A enters the room 201 hides the birthday card being produced in a hurry.

At the time T2, the guest A enters the room 201, thereby interrupting the actions of the user B and the user C of the production of the birthday card. Such a situation, for example, is the same as the situation described with reference to FIG. 11.

Therefore, in case as well of the situation as explained with reference to FIG. 22 as long as when the user A enters the room 201, the production of the birthday card does not continue (the action does not continue), the user A is not added as the user who shares the topic of "production (action) of birthday card." That is, the topic database 76 is not updated.

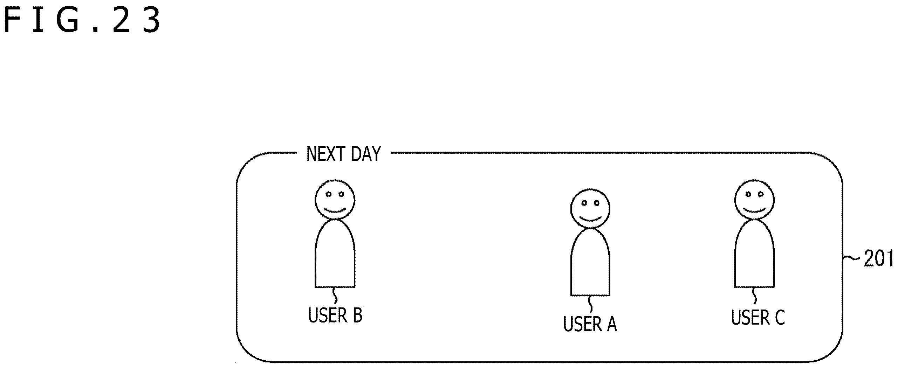

In such a manner, the topic database 76 is not updated. Therefore, even when, for example, on the next day following the day when the birthday card as depicted in FIG. 21 was produced, as depicted in FIG. 23, the user A, the user B, and the user C stay in the room 201, the presentation of the information is not performed from the information processing system.

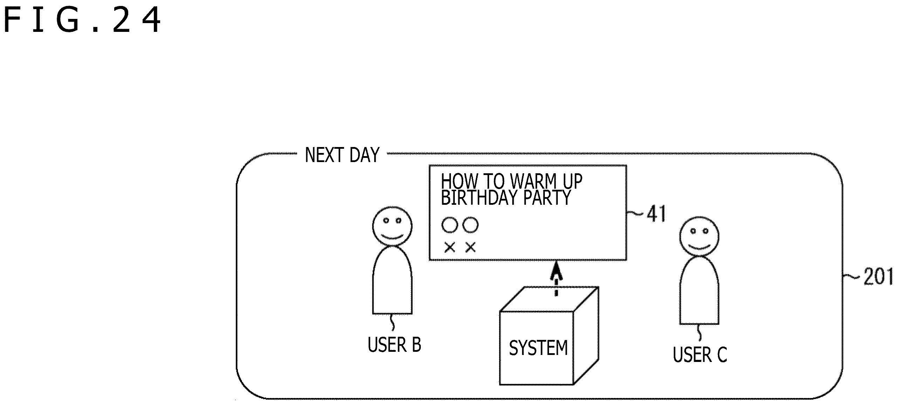

On the other hand, on the next day following the day when the birthday card as depicted in FIG. 21 was produced, as depicted in FIG. 24, only the user B and the user C stay in the room 201, the presentation of the information is performed from the information processing system. For example, in an example depicted in FIG. 24, the recommendation list 41 in which information of "how to warm up birthday party ○○ ×× ··" is presented to the user B and the user C.

Even when the action is monitored and the setting of the shared information is performed, the processing can be processed similarly to the case where the conversation described above is monitored and the setting of the shared information is performed.

In such a manner, not the conversation, but the action may be monitored, and the setting of the shared information may be performed. In addition, both the conversation and the action may be monitored, and the setting of the shared information may be performed.

### <Other Setting of Shared Information>

In the embodiment described above, the case where the users who basically perform the same action: have the conversation; and produce the birthday card are set as the sharers, and the action contents are made the shared information has been given as the example.

The present technology is not limited in application range to the case where the users who perform the same action are set as the subject, and can be applied to the case as well where the user who acts alone is set as the monitoring subject, and the shared information is set.

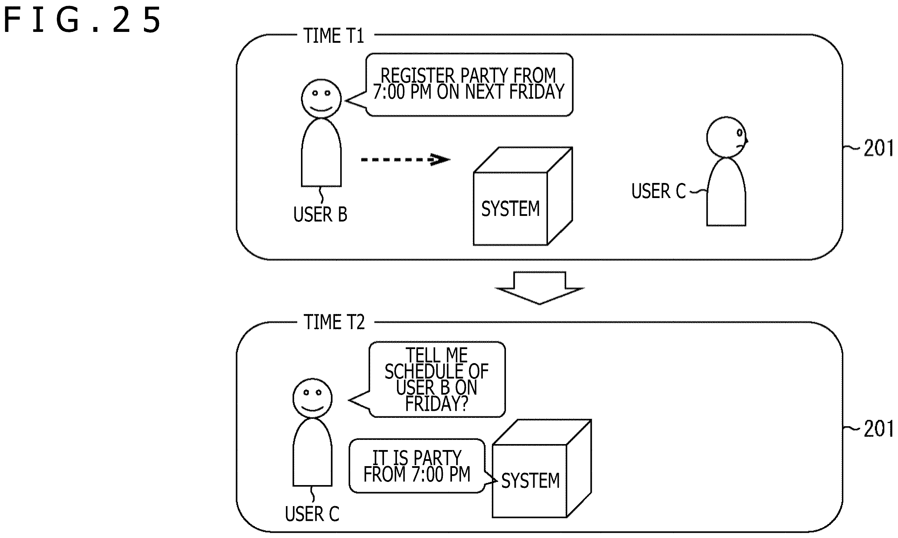

With reference to FIG. 25, the case where the user who acts alone is set as the monitoring subject, and the shared information is set will now be described. At time T1, the user B makes the utterance to say that "register party from 7:00 PM on next Friday" to the information processing system.

In this case, the information processing system manages the schedule as well of the user. For example, the information processing system is configured to execute the processing such that when it becomes time to take a predetermined action described in the schedule, the user is notified of this effect.

When the user B registers his schedule in the information processing system, the user C also stays there. In this case, the user B does not talk to the user C, and the situation is not set in which the user B and the user C have the conversation. It should be noted that the situation is not limited to the schedule, and thus a situation may be available such that a predetermined topic is spoken.

In such a situation, it is considered that the user B does not conceal his schedule to the user C. In such a manner, when the predetermined user registers the schedule or the like, the user who is in the state in which he/she can listen to the registration contents is set as a user who may share the information such as the schedule.

At time T1, after the time T2 when the user B registered the schedule in the information processing system in front of the user C, the user C requests to say that "tell me schedule of user B on Friday?" Since the user C is set as the sharer about the schedule of the user B on Friday, the information processing system responds to say that "party from 7:00 PM" to the user C.

On the other hand, although not illustrated, for example, in the case where the user D who is not set as the sharer of the schedule information of the user B, inquires the information processing system about the schedule of the user B on Friday, the information processing system responds to say that "I don't know" to the user D, or responds to say that "the user B has a plan" to the user D. Thus, the information processing system does not present the detailed information such as "party" to the user D.

In such a manner, the user is in the state in which the user who can listen to the information issued from the predetermined user becomes the user who stays in the same space and so forth is registered as the user who can share the information in the topic database 76.

For example, in the case where the user B performs such setting as not to share his schedule, even when the situation as described with reference to FIG. 25 occurs, the information regarding the schedule of the user B may not be presented to the user C.

That is, the user can set the information which is shared with another user, or is not shared with another user.

In addition, although the user B and the user C stay in the room 201, in the case where the user B registers the schedule in the information processing system in a sound volume such that it is not listened by the user C, the schedule of interest may not be set in the information shared with the user C.

That is, the information which is shared with another user, or is not shared with another user can be set depending on the magnitude (sound volume) of the voice when the information is registered.

In addition, in the case where when the information is registered, the user who performs the registration explicitly expresses the will by which the information is not shared, and so forth, the setting may be performed such that the information of interest is not shared. The case where the will by which the information is not shared is explicitly expressed is the case where the registration is performed in a low voice, an instruction of "no sharing" is issued, the information is inputted in a state in which it cannot see another user, and so forth.

Incidentally, the information which is preferably shared among the family members such that who returns home, and how a situation of locking up is made to be shared irrespective of the intention of the user. The information processing system may also manage such information, and may also suitably present such information to the user (family).

In addition, when the schedule or the like is registered, the information of interest may be set as the shared information with the associated user. For example, in the case where the user A registers the schedule of "shopping with user B," this schedule is set as the information shared with the user B.

In the case where the shared information is set in such a manner, the schedule of "shopping with user A" may be written to the schedule of the user B even if there is no instruction from the user B.

In addition, in the case where during the conversation, the schedule, TODO or the like is set, the information is written to the schedule or the TODO list of the user who has the conversation, whereby the shared information may be set. For example, in the case where the user A and the user B talk to say that "on this weekend, let's go shopping together," the information regarding the shopping is written to each of the weekend schedules of the user A and the user B.

In addition, there may be provided a mechanism such that the sharing range is set based on the shared information previously set, and when only the sharer stays in the place, the action about the information which the sharers who stay in the place of interest share in common is taken on the information processing system side.

In addition, the information processing system may be provided with a mechanism for estimating emotion or interest of the user. For example, the topic registered in the topic database 76 is analyzed, thereby enabling preference information or the like of the predetermined user to be acquired. For example, the recommendation list 41 (FIG. 24 or the like) may be produced in consideration of such preference information. Such preference information can be made not to be disclosed to any person other than the user himself/herself (not set in the shared information).

In addition, in any of the case where the conversation described above is monitored, the case where the action is monitored, the case where the schedule or the like is registered, the procedure may be adopted such that whether or not the information is held in common can be depending on the state of the attitude, the posture, the gaze or the like of the user.

For example, there may be the case where even when the user A and the user B have the conversation, both of them do not necessarily perform the utterance, and the user A talks one-sidedly and the user B merely listen thereto. In such a case, in the case where if it is decided whether or not the user A talks with only the voice, it cannot acquire the voice of the user B, and it is possible that it cannot detect the situation in which the user A and the user B have the conversation.

In the case where it is possible to decide that the user B has the conversation with the user A depending on the state of the attitude, the posture, the gaze or the like of the user B, for example, in the case where it is possible to decide that the user B takes the gesture such as the nod, the information which is taken in this case may be set as the information which is shared between the user A and the user B.

The setting of the shared information, as described above, is performed in the situation of the case where the conversation described above is monitored, the case where the action is monitored, the case where the schedule or the like is registered, and the like. However, in addition to such a situation, for example, the setting of the shared information may be performed based on the attribute of the user.

For example, in the case where the user has the attribute of the child, all the conversations which are performed from the user belonging to the child may be set in the shared information. For example, even when the children have the conversation and the parent does not stay there, the conversation at that time is set in the information shared with the parent as well.

In addition, for example, in case of the conversation at the time of study between the children, the conversation at the time of study between the child and the man or the woman, or the like, the conversation itself is not shared, but only the main point in learning such as a question and an answer may be set in the shared information.

In addition, the conversation between the family members during absence from the home, or the conversation with the guest, and the like may be set as the information which is shared with the family member who did not stay in the home during absence from the home. In addition, the contents which are performed in the predetermined room such as the living room may be set as the information which is also shared with the family member who did not stay in the predetermined room when the conversation was performed. In addition, if the conversation is performed at a predetermined sound level or more, such a conversation may be set as the information which is shared with the family member as well who does not stay there.

When the information processing system usually performs the monitoring, by executing the processing as described above, the setting about the information sharing may be performed, while when the information processing system does not usually perform the monitoring, the setting about the information sharing may be performed in the following manner.

For example, in the case where the time at which the information processing system starts the monitoring and the time at which the information processing system ends the monitoring are set, all the pieces of information obtained during the monitoring, may be set as the shared information. The wording "all the pieces of information are shared" means that the information is shared within the range of the users for whom the sharing is previously set, for example, the information is shared among the family members.

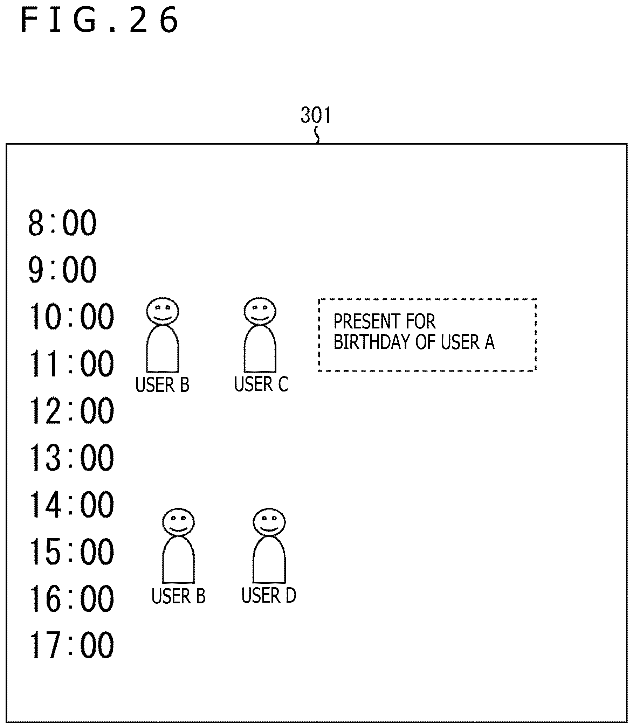

In the case where in the manner as described above, the shared information and the sharer are set, a picture 301 as depicted in FIG. 26 can also be presented to the users. FIG. 26 is a view depicting an example of a picture which is displayed on a mobile terminal, a personal computer or the like of a predetermined user.

In addition, the picture 301 depicted in FIG. 26 is a picture which is presented to the user C. In addition, the picture depicted in FIG. 26 is a picture in which the history of the users who had the conversation in the predetermined room, for example, in the living room is displayed.

The picture 301 depicted in FIG. 26 is a picture in which the situation of the conversation is displayed on a time line. On the left-hand side of the picture, the time, for example, is displayed every one hour. For example, it is displayed that for a period of time from 10:00 to 11:00, the user B and the user C had the conversation in the living room.

In addition, in the case where with respect to the contents of the conversation performed for this period of time, the user C is also set as the sharer, the information which is shared is displayed. Since in the example depicted in FIG. 26, the user C is set as the sharer, the information such as "present birthday of user A" is displayed.

In addition, it is displayed that for a period of time from 14:00 to 15:00, the user B and the user D had the conversation in the living. Since with respect to the contents which were talked for this period of time, the user C was not as the sharer, the information regarding the conversation contents is not displayed.

In the case where for a period of time from 14:00 to 15:00, the setting is changed to the setting in which the contents in which the user B and the user D had the conversation in the living are shared with the user C as well, the shared information is displayed.

The user performs a predetermined manipulation, for example, clicks the displayed information, whereby the user can browse the more detailed information.

Such a picture can also be presented to the user.

In the embodiment described above, the shared information may be the conversation contents themselves which were recorded.

In addition, the shared information may be the abstracted information or the summarized information. For example, in the case where the abstracted information is set as the shared information, the information such as "today, the user A and the user B have conversation" can be set. In addition, in the case where the summarized information is set as the shared information, when the conversation of interest is the conversation during the study, only a unit can be told to the parent, and the actual conversation can be prevented from being told to the parent.

In the embodiment described above, from the information processing system side, the topic is shared with the user (member) who has not shared the topic, the member who previously shares the topic is confirmed of this effect at an abstract level, and processing for increasing the number of shared members may be executed.

For example, in the case where only the members who strictly perform the sharing have the topic, if anyone who does not share the topic is present within the members, then, it is possible that the action is hardly taken from the information processing system, and the convenience becomes poor. For the purpose of reducing such possibility, for example, in case of the topic which is not high in confidentiality, the processing for actively increasing the number of sharing members may be executed. The processing for actively increasing the number of sharing members, for example, makes inquiry about whether to share from the information processing system side, the processing for performing invitation of "do you want share this topic with the user ××?" is executed.

In the embodiment described above, the shared information may be taken over to the personal terminals of the sharers, other devices within the home, or the like.

In the embodiment described above, the information processing system does not take action only when receiving a request such as a question from the user, but even when the information processing system proactively takes action, after the information processing system recognizes the user (member) who stays there and confirms the sharing setting, the information processing system may take action.

In the embodiment described above, the information processing system may be provided with a function of, in the case where the shared mode is set, and a factor which switches the shared mode is generated, notifying the user of this effect.

For example, in case of a mode in which the users who share the topic have the conversation, when the user who does not share the topic comes on, the users may be notified of this effect. In this case, it is possible that the user who does not share the topic comes on, whereby the mode in which the topic is shared is changed to a mode in which the topic is not shared. In addition, even when the user who does not share the topic comes on, if the contents of the conversation which is performed at this time is not changed, then, the setting is changed in such a way that the user who comes on is also set as the sharer who shares the topic.

In the case where it is possible that such a change occurs, the user may be notified of this effect.

In addition, for example, the mode may be changed, or the notification may be performed depending on the time zone or the like. For example, when it becomes time to go home of the user who does not share the predetermined topic, the mode may be changed, or the user may be notified of this effect.

### <With Respect to Recording Medium>

The series of processing described above can be executed by hardware, or can be executed by software. In the case where the series of processing are executed by the software, a program composing the software is installed in a computer. Here, the computer includes a computer incorporated in a dedicated hardware, for example, a general-purpose personal computer which can perform various kinds of functions by installing various kinds of parameters, and the like.

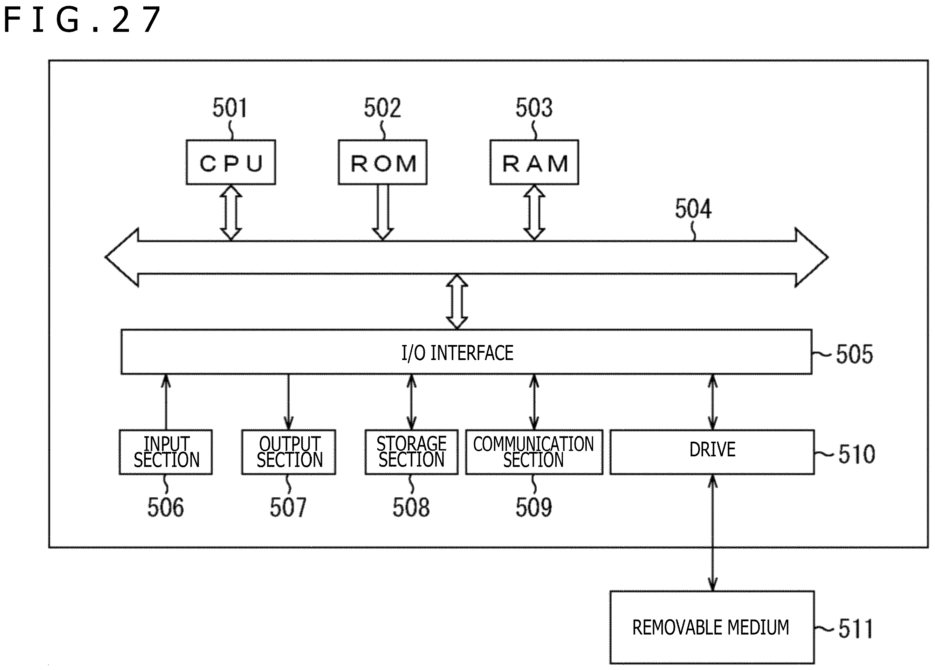

FIG. 27 is a block diagram depicting an example of a configuration of hardware of a computer which executes the series of processing described above in accordance with a program. The information processing section 12 (FIG. 6) can be configured by the computer, for example.

In a computer, a CPU (Central Processing Unit) 501, a ROM (Read Only Memory) 502, and a RAM (Random Access Memory) 503 are connected to one another through a bus 504. An I/O interface 505 is further connected to the bus 504. An input section 506, an output section 507, a storage section 508, a communication section 509, and a drive 510 are connected to the I/O interface 505.

The input section 506 includes a keyboard, a mouse, a microphone or the like. The output section 507 includes a display, a speaker or the like. The storage section 508 includes a hard disc, a non-volatile memory or the like. The communication section 509 includes a network interface or the like. The drive 510 drives a removable medium 511 such as a magnetic disc, an optical disc, a magneto-optical disc or a semiconductor memory.

In the computer configured in the manner as described above, the CPU 501, for example, loads a program stored in the storage section 508 into the RAM 503 through the I/O interface 505 and the bus 504, and executes the program, thereby executing the series of processing described above.

The program which is to be executed by the computer (CPU 501), for example, can be recorded in the removable medium 511 as a package medium or the like to be provided. In addition, the program can be provided through a wired or wireless transmission medium such as a local area network, the Internet, or digital satellite broadcasting.

In the computer, the drive 510 is equipped with the removable medium 511, thereby enabling the program to be installed in the storage section 508 through the I/O interface 505. In addition, the program can be received at the communication section 509 and can be installed in the storage section 508 through a wired or wireless transmission medium. Otherwise, the program can be previously installed in the ROM 502 or the storage section 508.

It should be noted that the program which is to be executed by the computer may be a program in accordance with which the pieces of processing are executed along the order described in the present description, or may be a program in accordance with which the pieces of processing are executed in parallel to one another or at a necessary timing when a call is made, or the like.

In addition, in the present description, the system means an entire apparatus including a plurality of apparatuses.

It should be noted that the effect described in the present description is merely an exemplification, and is by no means limited, and thus other effects may be offered.

It should be noted that the embodiment of the present technology is by no means limited to the embodiment described above, and various changes can be made without departing from the subject matter of the present technology.

It should be noted that the present technology can also adopt the following constitutions.
(1) An information processing apparatus, including:
   a setting section configured to set a topic representing contents of utterance;
   a storage section configured to store the topic and a sharer who shares the topic so as to be associated with each other; and
   a presentation section configured to, in a case where it is detected that the sharer stays together, present information associated with the topic to the sharer.
(2) The information processing apparatus according to (1) described above, in which the sharer is a user who has conversation about the topic.
(3) The information processing apparatus according to (1) or (2) described above, in which the presentation section presents a keyword extracted from the utterance to the sharer.
(4) The information processing apparatus according to any one of (1) to (3) described above, in which the presentation section acquires information associated with the topic from other apparatus and presents the acquired information to the sharer.
(5) The information processing apparatus according to any one of (1) to (4) described above, in which when the utterance is performed, a user who stays there is set as the sharer.
(6) The information processing apparatus according to any one of (1) to (5) described above, in which
   a second user who stays when a first user performs utterance about a predetermined topic is set as a sharer of the information associated with the schedule of the first user; and
   when the second user requests to present the information associated with the predetermined topic of the first user, the presentation section presents the information associated with the predetermined topic of the first user to the second user.
(7) The information processing apparatus according to any one of (1) to (6) described above, in which in a case where when the sharer has conversation about the topic, a user other than the sharer participates in the conversation, the user who participates in the conversation is also set as a sharer.
(8) The information processing apparatus according to (7) described above, in which the user who participates in the conversation is a child, the user is not set as the sharer.
(9) The information processing apparatus according to (7) described above, in which the user who participates in the conversation is a guest, the user is not set as the sharer.
(10) The information processing apparatus according to any one of (1) to (9) described above, in which in a case where when the sharer has the conversation about the topic in a predetermined room, a user other than the sharer enters the predetermined room, thereby interrupting the conversation, the user who enters the predetermined room is not set as a sharer.
(11) The information processing apparatus according to any one of (1) to (10) described above, in which in the case where a sharer is added to a predetermined topic stored in the storage section, a sharer who is early set as the sharer is notified of that the sharer is added.
(12) The information processing apparatus according to any one of (1) to (11) described above, in which
   the setting section monitors an action of a user and sets the action as the topic;
   the storage section sets a user who performs the action together as a sharer; and
   the presentation section, when only the sharer stays in a predetermined place, presents the information associated with the topic to the sharer.
(13) The information processing apparatus according to any one of (1) to (12) described above, in which the presentation section presents a picture in which a situation of conversation is displayed on a time line.
(14) The information processing apparatus according to any one of (1) to (13) described above, in which the topic stored in the storage section, and a sharer who shares the topic are browsed and edited by a user.
(15) The information processing apparatus according to (14) described above, in which the edition includes edition of the topic, and addition and deletion of the sharer.
(16) An information processing method, including the steps of:
   setting a topic representing contents of utterance;
   storing the topic and a sharer who shares the topic so as to be associated with each other; and
   in a case where it is detected that the sharer stays together, presenting information associated with the topic to the sharer.
(17) A program for causing a computer to execute processing, including the steps of:
   setting a topic representing contents of utterance;
   storing the topic and a sharer who shares the topic so as to be associated with each other; and
   in a case where it is detected that the sharer stays together, presenting information associated with the topic to the sharer.

### [Reference Signs List]

11 Information acquiring section, 12 Information processing section, 21 External service processing section, 31 Out-of-home network, 51 Sound acquiring section, 52 User state acquiring section, 71 User state analyzing section, 72 User database, 73 User recognizing section, 74 Sound processing section, 75 Topic database producing section, 76 Topic database, 77 Information presentation deciding section, 78 Information presenting section

## Claims

1. An information processing apparatus, comprising:
a setting section configured to set a topic representing contents of utterance;
a storage section configured to store the topic and a sharer who shares the topic so as to be associated with each other; and
a presentation section configured to, in a case where it is detected that the sharer stays together, present information associated with the topic to the sharer.

2. The information processing apparatus according to claim 1, wherein the sharer is a user who has conversation about the topic.

3. The information processing apparatus according to claim 1, wherein the presentation section presents a keyword extracted from the utterance to the sharer.

4. The information processing apparatus according to claim 1, wherein the presentation section acquires information associated with the topic from other apparatus and presents the acquired information to the sharer.

5. The information processing apparatus according to claim 1, wherein when the utterance is performed, a user who stays there is set as the sharer.

6. The information processing apparatus according to claim 1, wherein
a second user who stays when a first user performs utterance about a predetermined topic is set as a sharer of the information associated with the predetermined topic of the first user; and
when the second user requests to present the information associated with the predetermined topic of the first user, the presentation section presents the information associated with the predetermined topic of the first user to the second user.

7. The information processing apparatus according to claim 1, wherein in a case where when the sharer has conversation about the topic, a user other than the sharer participates in the conversation, the user who participates in the conversation is also set as a sharer.

8. The information processing apparatus according to claim 7, wherein the user who participates in the conversation is a child, the user is not set as the sharer.

9. The information processing apparatus according to Claim 7, wherein the user who participates in the conversation is a guest, the user is not set as the sharer.

10. The information processing apparatus according to claim 1, wherein in a case where when the sharer has the conversation about the topic in a predetermined room, a user other than the sharer enters the predetermined room, thereby interrupting the conversation, the user who enters the predetermined room is not set as a sharer.

11. The information processing apparatus according to claim 1, wherein in the case where a sharer is added to a predetermined topic stored in the storage section, a sharer who is early set as the sharer is notified of that the sharer is added.

12. The information processing apparatus according to claim 1, wherein
the setting section monitors an action of a user and sets the action as the topic;
the storage section sets a user who performs the action together as a sharer; and
the presentation section, when only the sharer stays in a predetermined place, presents the information associated with the topic to the sharer.

13. The information processing apparatus according to claim 1, wherein the presentation section presents a picture in which a situation of conversation is displayed on a time line.

14. The information processing apparatus according to claim 1, wherein the topic stored in the storage section, and a sharer who shares the topic are browsed and edited by a user.

15. The information processing apparatus according to claim 14, wherein the edition includes edition of the topic, and addition and deletion of the sharer.

16. An information processing method, comprising the steps of:
setting a topic representing contents of utterance;
storing the topic and a sharer who shares the topic so as to be associated with each other; and
in a case where it is detected that the sharer stays together, presenting information associated with the topic to the sharer.

17. A program for causing a computer to execute processing, comprising the steps of:
setting a topic representing contents of utterance;
storing the topic and a sharer who shares the topic so as to be associated with each other; and
in a case where it is detected that the sharer stays together, presenting information associated with the topic to the sharer.
